# EUROPEAN PATENT APPLICATION

(11) **EP 0 617 887 A2**
(43) Date of publication of application: **05.10.1994**
(21) Application number: 94200857.4
(22) Date of filing: 29.03.1994
(51) Int. Cl.: A01K 1/12, A01J 7/00

(54) **A construction for milking animals, such as cows**

(30) Priority: 01.04.1993 NL 9300579
(71) Applicant: MAASLAND N.V., NL-3155 PD Maasland (NL)
(72) Inventor: van der Lely, Cornelis, CH-6300 Zug (CH)
(74) Representative: Mulder, Herman

(57) **Abstract**

The invention relates to a construction for milking animals, such as cows, comprising a milking box (1), one or more milking robots (4) and a control room (31). The construction in accordance with the invention includes a control room (31) that is located aside of a milking box (1) in such a manner that the side of the milking box (1) constitutes a wall of the control room (31).

## Description

The invention relates to a construction for milking animals, such as cows, comprising a milking box, one or more milking robots and a control room.

Such a construction is known from EP-PA-0 270 165.

A problem with the above mentioned construction is that the control room is at a relative large distance from the milking box, while the farmer is only able to observe the milking process from behind a transparent wall.

An object of the present invention is to provide the construction for milking animals with a control room from which the farmer is not only able to observe the milking process but is also able to intervene.

To that end the construction for milking animals is characterized in that the control room is located aside of a milking box in such a manner that the side of the milking box constitutes a wall of the control room.

This offers a supervisor not only a good view of the milking construction but it makes it also possible to carry out maintenance to the milking robot from or in the control room.

In accordance with a further feature of the invention, the side of the milking box has a height of approximately 2.1 metres.

In accordance with still another feature of the invention the control room is provided with a floor which slopes down towards a dung cellar. As in general a cow shed with animals is dusty and dirty, it is of advantage to have a control room which is easy to clean.

The invention further has for its object to improve a construction as mentioned in the preamble. To that end, the construction is characterized in that it comprises a cubicle shed having at least two rows of resting boxes, which are arranged at least for the main part at one side of the shed and wherein at least one milking robot is positioned at the end of a row of resting boxes. As a result thereof, the construction in accordance with the invention has the advantage that the animals can easily enter the milking box from the resting area.

In accordance with a further feature of the invention, the exit of a milking box gives acess to an adjoining feeding area, in which measures have been taken to ensure that there is always a sufficient quantity of fodder therein. Since the exit of the milking box is contiguous to a feeding area, the animal, after the end of the automatic milking procedure in the milking box, will leave same comparatively rapidly in order to go and feed in the feeding area, whilst the animal will not easily be inclined to lie down, after having been milked, on the possibly dirty floor.

This last-mentioned fact has the advantage that any contact of the udder with the floor is avoided, which contact might increase the risk that the animal is infected with mastitis.

Especially after milking, a cow is particularly sensitive to mastitis, as after the milking procedure has ended it takes some time for the muscles to contract and consequently for the apertures in the teats to have been closed.

The invention therefore further relates to a construction for milking animals, such as cows, comprising a milking box and one or more milking robots, characterized in that the exit of a milking box gives acess to feeding area, which is of such size that a sufficient quantity of fodder is available.

In accordance with a further feature of the invention, a separate area is joined to the milking box, in which parts of the milking machine can be cleaned. As in general a cow shed with animals is dusty and dirty, a separate cleaning area has the advantage that cleaning can be effected in hygienic circumstances. The invention therefore further relates to a construction for milking animals, such as cows, comprising a milking box and one or more milking robots, characterized in that a separate area is joined to the milking box, in which parts of the milking machine can be cleaned.

The invention further relates to a construction for milking animals, such as cows, comprising a milking box and one or more milking robots, characterized in that a milking box has a grid floor which is approximately flush with the level of the walking passage in the shed. Since the transition from the milking box to the walking passage is at the same ground level, the animal is not hindered when passing from one area to the other, the one floor surface smoothly merging into the other.

The invention further relates to a construction for milking animals, such as cows, comprising a milking box and one or more milking robots, characterized in that the milking box is placed over a dung cellar. Since the milking box is comparatively close to the dung cellar, it is possible to discharge dung, cleaning and rinsing water in a fast and efficient manner thereinto.

For a better understanding of the invention and to show how the same may be carried into effect, reference will now be made, by way of example, to the accompanying drawings, in which:
Figure 1 is a perspective view of a milking box with a milking robot;
Figure 2 is a plan view of a cubicle shed having incorporated therein the milking box of Figure 1;
Figure 3 shows a detail of the milking box as shown in Figure 2 with an adjoining control room;
Figure 4 is a plan view of a dung cellar positioned under the milking box;
Figure 5 is a cross-sectional view taken on the line A-A in Figure 4;
Figure 6 shows an alternative construction, in which a dung pit is disposed under the milking box;
Figure 7 is a cross -sectional view taken on the line B-B in Figure 6;
Figure 8 is a plan view of the control room shown in Figure 3 in which a boiler for the hot water supply of the milking construction is incorporated, and
Figure 9 is a detailed representation of the boiler shown in Figure 8.

In the drawings, corresponding component parts have been given the same reference numerals. The invention is in no way limited to the embodiments shown and described here; they only serve by way of illustration of the inventive idea.

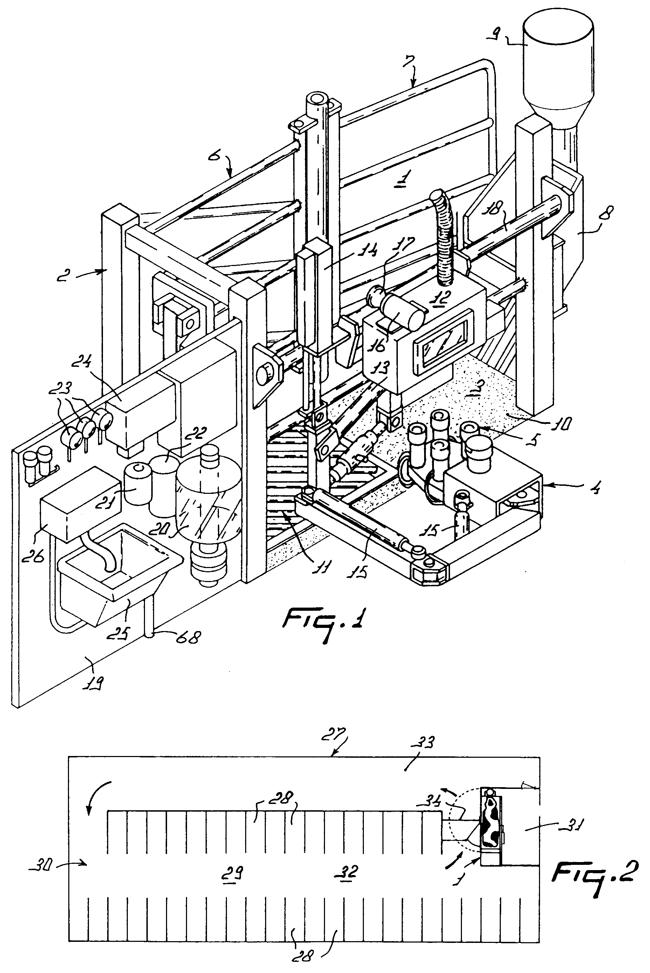

Figure 1 shows a milking construction 1, comprising a milking parlour which is defined by a fence 2 and in which an animal is positioned during milking. The milking construction 1 includes a milking robot having a robot arm 4, with the aid of which the teat cups 5 can automatically be connected to the teats of the animal to be milked. The milking construction 1 has an entrance door 6 and an exit door 7. In addition, near the front side of the milking parlour 3 there is disposed a feed trough 8, over which a feed hopper 9 ends. A measured quantity of fodder, such as concentrate, can be deposited in the feed trough 8 via the feed hopper 9. The milking area 3 is further provided with a roughened floor 10, whilst a grid 11 is present in the floor 10 near the rear end of the milking parlour 3.

Near the side of the milking parlour 3, the fence 2 is fitted with a control computer 12 for inter alia the control of the robot arm 4. The control computer 12 is connected via a parallelogram construction 13 to the robot arm 4. The fence 2 is further provided with a vertically arranged pneumatic cylinder 14, with the aid of which the robot arm 4 can be adjusted in height. By means of two further pneumatic cylinders 15 disposed on the robot arm 4, the robot arm 4 can be moved in a horizontal plane. In addition, near the upper side of the control computer 12 there is arranged an electric motor 16 which drives a roller 17 which can roll along a longitudinally extending guide bar 18 of the fence 2. Using the electric motor 16, the robot arm 4 can be moved in the longitudinal direction of the milking parlour 3.

The rear side of the milking construction 1 is furthermore provided with a vertical wall section 19, which, together with the milking construction 1, forms a movable, integral whole. Attached to the vertical wall section 19 there is a collecting glass 20 for collecting the extracted milk, and also a fluid separator 21, a vacuum reservoir 22 and manometers 23 for the vacuum system of the teat cups 5. A cabinet 24 containing electronics for controlling the various valves associated with the milking procedure is provided near the upper side of the vertical wall section 19. A fodder management computer is attached to the vertical wall 19 next to the cabinet 24. The vertical wall 19 further accommodates a rinsing fluid reservoir 25 with overhead a mixing valve unit 26, with the aid of which rinsing fluid can be prepared for cleaning and/or disinfecting the milk line system of the milking construction 1.

The milking construction 1 described in the foregoing is an automatic milking plant, by means of which, depending on the situation, at least forty cows can be milked every twenty-four hours. After the cow 3 has entered the milking parlour 3, the milking cycle is automatically passed through by the milking robot, whereafter the cow can leave the box again.

The milking construction 1 is particularly suitable for accommodation in a cubicle shed 27, as shown in Figure 2. The cubicle shed 27 comprises two rows of lying boxes 28, of which one row is positioned at one side of the cow shed 29, whereas the second row of lying boxes 28 is positioned approximately halfway the shed. The milking construction 1 is placed near an end of the row of lying boxes 28 in the centre of the shed, whilst near the other end of the central row of lying boxes 28 there is a free passage 30 between the shed wall and the end. A control room 31 is located between the milking construction 1 and the front side of the cubicle shed 27. The control room 31 is adjacent to the milking construction 1 and consequently offers a superviser a good view of the milking construction 1. From the space 32 between the two rows of lying boxes 28, the animals can enter the milking parlour 3 via the entrance door 6. The exit door 7 of the milking construction 1 is contiguous to a passage 33 formed by the rear wall of the row of lying boxes arranged in the centre of the shed 29 and a side wall of the shed 29. To prevent the cow from lying down on the floor of the shed 29 after having been milked, the passage 33 is provided with a plurality of feeding stations. By means of an automatic feeding system, not shown in the drawing, it is ensured that there is always a sufficient quantity of fodder for the animals in the feeding stations. In this way it is avoided that a periodical supply of fodder causes a rush towards the feeding stations.

A railing 34 separating the resting area 32 from the walking passage 33 is placed between the milking construction 1 and one end of the central row of lying boxes 28. The dimensions of the railing 34 have been chosen such that the entrance door 6 and the exit door 7 can be opened sufficiently far.

The minimum room required for the milking construction 1, including the control room 31, is approximately 4.5 times 2.1 metres.

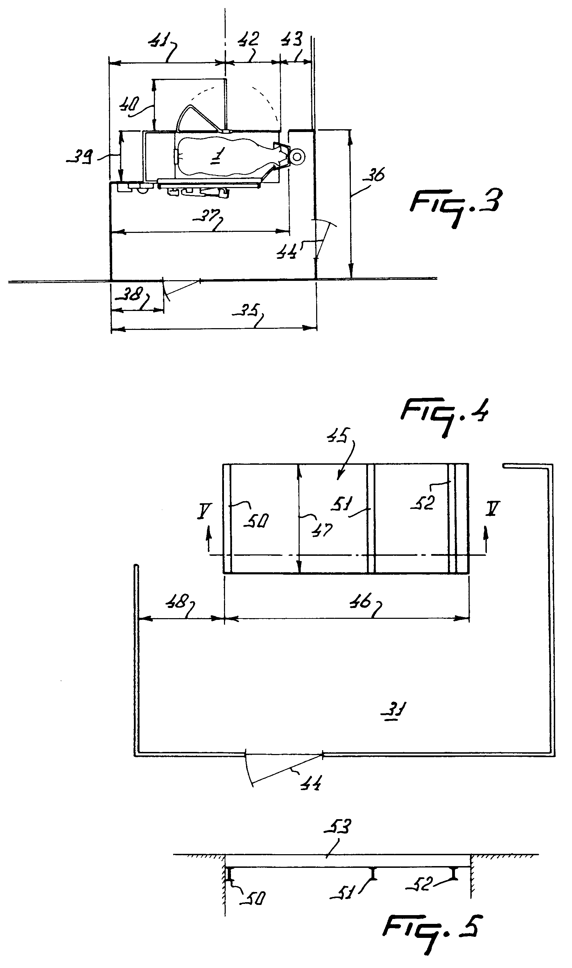

Figures 3 - 9, which will be described hereafter, are mainly intended to specify the minimum dimensions required for building-in the milking construction 1 in accordance with the invention.

Figure 3 is a plan view of the milking construction 1 with adjoining control room 31.

The following dimensions should be preferred:
35. the length of the control room is at least 4500 mms.
36. the width of the control room is at least 2100 mms.
37. the length of the rear side of the control room until the feeding trough is 4200 mms.
38. the length of the rear side of the control room until the feeding trough is at least 1200 mms.
39. the width of the milking box is 850 mms.
40. the radius of the circle described by the entrance door and the exit door is 1200 mms.
41. the length of the rear side of the control room until the pivot shaft of the entrance door and the exit door is 2750 mms.
42. the length of the feeding trough until the pivot shaft of the entrance door and the exit door is 1200 mms.
43. the area in front of the exit gate, when the animals leave at a square angle, is at least 650 mms.

Depending on where the milking construction 1 is situated in the shed 29, a door 44 can be placed in the long side or the short side at the side of the feeding area 33. When the minimum dimensions for building-in are observed, preference should be given to placing the door 44 in the long side. When the door is placed in the short side at the side of the feeding area 33, then the width of the required area must not be less than 2650 mms. The wall of the control room 32 must have a height of not less than 2 metres.

The milking construction 1 can be disposed in the shed 29 over a dung cellar as well as over a dung pit.

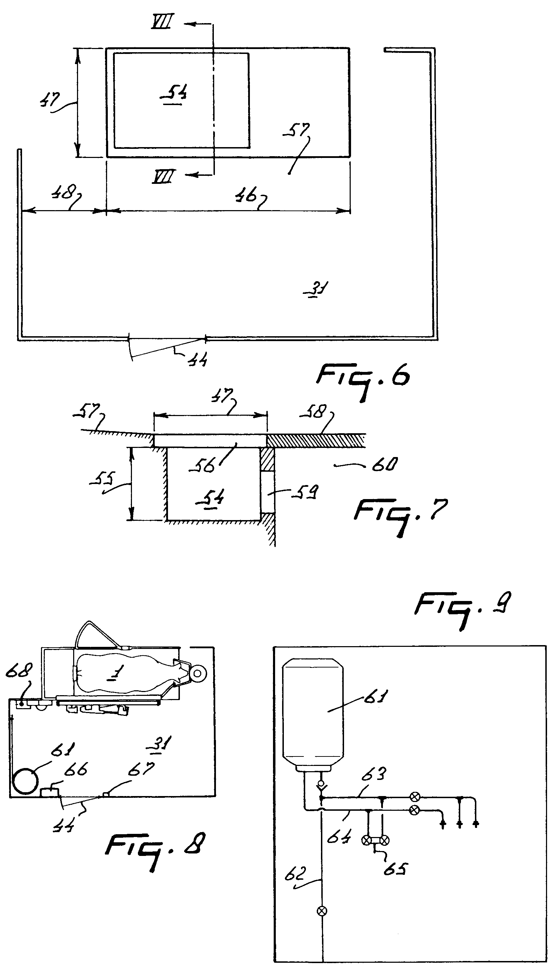

Figure 4 is a plan view of the control room 31 having a dung cellar 45. The following sizes are associated with this Figure:
46. the overall length of the dung cellar is 3050 mms.
47. the overall width of the dung cellar is 960 mms.
48. the space between the rear side of the dung cellar and the rear wall of the dung cellar is 870 mms.

The dung cellar 45 is further provided with a first joist 50 positioned near one end of the dung cellar in the widthwise direction of the milking construction. At a distance of 1600 mms and a distance of 2750 mms from the first joist 50 a second and a third joist 51, 52, respectively, are present. The joists 50 - 52 are preferable made from a 100mm-wide I-section. In Figure 5, which is a cross-sectional view taken on the line A-A in Figure 4, it is further shown that the joists 50 - 52 are placed below the level of the control room 31. A grid 53 having a thickness of 130 mms is placed on top of the joists 50 - 52. The upper side of the grid 53 is flush with the floor of the control room 31. Preferably, the floor of the control room 31 slopes down two to four percent towards the dung cellar.

Figures 6 and 7 are a plan view and a cross-sectional view (taken on the line B-B), respectively, of an embodiment in which the milking construction 1 is placed over a dung pit 54. The length and the width of the dung pit 54 are identical to those of the dung cellar 45 (L x W - 960 mms x 1600 mms). The dung pit has a depth 55 of 800 mms (Figure 7). The dung pit 54 is closed by an 130 mm thick grid 56. The grid 56 is at one side contiguous to the sloping floor 57 of the control room 31 and at the other side to the grid floor of the shed 29. A side wall of the dung pit is provided with an aperture which, from the dung pit 54, gives access to a dung cellar 60 under the shed 29.

For a periodical cleaning of more in particular the milk line system, it is of importance that a hot water supply is provided near the milking construction 1. As is shown in Figures 8 and 9, a boiler 61 has been placed in the control room to supply the required hot water. The boiler 61 is connected to a line 62 of the water mains. In addition, the water line 62 incorporates a branch line 63 which is connected to the mixing valve unit 26. The hot water line 64 of the boiler 61 is also connected to the mixing valve unit 26. Moreover, a mixing valve 65 is connected to the branch line 63 and the hot water line 64 (Figure 9). The required capacity of the boiler 61 depends on the length of the milk ring line system and the capacity of the milk tank.

As is shown in Figure 8, the control room 31 further includes a main switch box 66 and light switches 67. The control room further includes a drain 68 for the cleaning water and/or rinsing fluid of the milking construction 1. The drain 68 may be connected to the sewer or to the dung cellar 45.

## Claims

1. A construction for milking animals, such as cows, comprising a milking box (1), one or more milking robots (4) and a control room (31), characterized in that the control room (31) is located aside of a milking box (1) in such a manner that the side of the milking box (1) constitutes a wall of the control room (31).

2. A construction as claimed in claim 1, characterized in that the side of the milking box (1) has a height of approximately 2.1 metres.

3. A construction as claimed in claim 1 or 2, characterized in that the control room (31) is provided with a floor which slopes down towards a dung cellar (45).

4. A construction as claimed in any one of the preceding claims, characterized in that the construction comprises a cubicle shed (27) having at least two rows of resting boxes (28), which are arranged at least for the main part at one side of the shed (27) and wherein at least one milking robot (4) is positioned at the end of a row (28) of resting boxes.

5. A construction for milking animals, such as cows, comprising a milking box (1) and one or more milking robots (4), characterized in that the construction comprises a cubicle shed (27) having at least two rows of resting boxes (28), which are arranged at least for the main part at one side of the shed (27) and wherein at least one milking robot (4) is positioned at the end of a row (28) of resting boxes.

6. A construction as claimed in any one of the preceding claims, characterized in that the exit (7) of a milking box (1) is contiguous to a feeding area (33), which is of such size that a sufficient quantity of fodder can always be available in said feeding area (33) for said cows.

7. A construction for milking animals, such as cows, comprising a milking box (1) and one or more milking robots (4), characterized in that the exit (7) of a milking box (1) is contiguous to a feeding area (33), which is of such size that a sufficient quantity of fodder can always be available in said feeding area (33) for said cows.

8. A construction as claimed in any one of the preceding claims, characterized in that, added to the milking box (1), there is a separate room (35) for the cleaning of parts of the milking machine (1).

9. A construction for milking animals, such as cows, comprising a milking box (1) and one or more milking robots (4), characterized in that the milking box is placed in the shed in such a way that there will be a control room (31), aside of a milking robot (4).

10. A construction as claimed in any one of the preceding claims, characterized in that the milking box (1) is provided with a grid floor (11) which is approximately flush with the walking passage in the shed (27).

11. A construction as claimed in any one of the preceding claims, characterized in that the milking box (1) is placed over a dung cellar (45).

12. A construction as claimed in any one of the preceding claims, characterized in that the construction is in the form of a cubicle shed (27).

13. A construction as claimed in any one of the preceding claims, characterized in that the construction can accommodate approximately forty cows.

14. A construction as claimed in any one of the preceding claims, characterized in that the cubicle shed (27) includes a walking passage for the animals, which is arranged along a wall of the cubicle shed (27).

15. A construction as claimed in any one of the preceding claims, characterized in that a control room (31) is added near the milking box (1).

16. A construction as claimed in any one of the preceding claims, characterized in that doors (6, 7) are provided in the longitudinal side of the milking box (1).

17. A construction as claimed in any one of the preceding claims, characterized in that the level of the control room floor is flush with the grid floor (11).

18. A construction as claimed in any one of the preceding claims, characterized in that the shed (27) includes a boiler (61), the capacity of which depends on the overall length of the milk ring line system.

19. A construction as claimed in any one of the preceding claims, characterized in that the shed (27) includes a feed hopper (9) for concentrate, the filling opening of which is approximately two metres above the floor surface (10).

20. A construction as claimed in any one of the preceding claims, characterized in that, disposed between the milking robot (4) and a tank room, there is a duct for accommodating the various cables and lines which are part of the construction.

21. A construction as claimed in any one of the preceding claims and/or as described in the accompanying description and/or as shown in the drawings.
